# EUROPÄISCHE PATENTSCHRIFT

(11) **EP 2 870 378 B1**
(45) Veröffentlichungstag und Bekanntmachung des Hinweises auf die Patenterteilung: **13.04.2022**
(21) Anmeldenummer: 13732419.0
(22) Anmeldetag: 20.06.2013
(51) Int. Cl.: F16F 9/38, F16F 9/05

(54) **LUFTFEDERBEIN**
AIR SPRING STRUT
JAMBE DE SUSPENSION PNEUMATIQUE

(30) Priorität: 03.07.2012 DE 102012211491
(43) Veröffentlichungstag der Anmeldung: 13.05.2015
(73) Patentinhaber: Continental Teves AG & Co. OHG, 60488 Frankfurt am Main (DE)
(72) Erfinder: GLEU, Jens Uwe, 30855 Langenhagen (DE)
(74) Vertreter: Continental Corporation
(86) Internationale Anmeldenummer: PCT/EP2013/062871
(87) Internationale Veröffentlichungsnummer: WO 2014/005847

(56) Entgegenhaltungen:
- WO-A1-2011/065041
- DE-A1- 10 302 495
- FR-A1- 2 138 839
- US-A1- 2006 012 089

## Beschreibung

Die Erfindung betrifft ein Luftfederbein bestehend aus einer Luftfeder und einem Dämpfer zu Federung und Dämpfung von Schwingungen eines Kraftfahrzeugfahrwerkes, welches zwischen Karosserie und Fahrwerk des Kraftfahrzeuges eingespannt ist, mit einem zwischen einem Luftfederdeckel und einem LuftfederAbrollkolben luftdicht eingespannten Luftfederbalg aus elastomerem Material, welcher unter Ausbildung einer Rollfalte am Luftfederkolben abrollt, mit einer den Luftfederbalg hülsenförmig umfassenden Außenführung und einem Faltenbalg, welcher die Rollfalte vor Verschmutzungen schützt und der an einem dem Luftfederdeckel abgewandten Ende der Außenführung befestigt ist.

Luftfederbeine oder Luftfedern, die zwischen Fahrwerk und Karosserie eingespannt sind und die einen Luftfederbalg aufweisen, der wiederum zwischen einem Luftfederdeckel und einem Abrollkolben befestigt ist, sind in eine Vielzahl von Ausführungen bekannt. Die Luftfeder steht im Betrieb unter einem inneren Überdruck.

Der Luftfederbalg rollt unter Last und bei Federbewegungen unter Bildung einer Rollfalte auf der Außenkontur des konzentrischen Luftfederabrollkolbens, welcher bei einem Luftfederbein an einem Zylinderrohr des Dämpfers befestigt ist, ab.

Bei Luftfedern im PKW-Bereich werden möglichst dünnwandige Luftfederbälge eingesetzt, da diese einen hohen Abrollkomfort sicherstellen. Um bei diesen eine genügende Tragfähigkeit des Gesamtsystems zu erreichen, werden die Luftfederbälge bzw. die Luftfedern oder -dämpfer mit so genannten Außenführungen versehen, nämlich mit einer den Luftfederbalg umgebenden rohrförmigen Hülse als "Stützkorsett" oder Stützkörper. So lässt sich beispielsweise ein dünner Luftfederbalg mit einer dünnen Leichtmetallhülse als Stützkörper auf hohe Innendrücke und damit hohe Tragfähigkeiten bei gleichzeitig gutem Harshness-Verhalten optimieren. Die Außenführungen sind dabei so ausgebildet und angeordnet, dass der Luftfederbalg einerseits an der Außenseite des Luftfederabrollkolbens und andererseits an der Innenoberfläche der Außenführung abrollen kann.

Dies hat jedoch zum Nachteil, dass solche Luftfederbälge im Gegensatz zu dickwandigen und somit robusteren Luftfederbälgen im Nutzfahrzeugbereich sehr viel empfindlicher auf Ablagerungen an den Abrollflächen oder gar zu überrollende Fremdkörper reagieren. Der komfortable Luftfederbalg reagiert auf das Überrollen von Ablagerungen oder Fremdkörpern sehr leicht mit starkem Abrieb oder Zerstörung seiner filigranen Festigkeitsträger, was den Ausfall der Luftfeder zur Folge haben kann.

Um dem entgegenzuwirken, setzt man insbesondere bei außengeführten Luftfedern einen Faltenbalg ein, um den Luftfederbalg vor Verschmutzungen (z.B. Staub, Sand und Steinchen von der Straße im Fahrbetrieb) zu schützen, wie beispielsweise aus der DE 103 02 495 A1 bekannt ist.

Durch die Verwendung eines Faltenbalges entsteht jedoch das Problem, dass sich bei Federbewegungen der Luftfeder gleichzeitig das Luftvolumen des von dem Faltenbalg umgebenden Raumes ändert und somit ein Gasaustausch zwischen der vom Faltenbalg eingeschlossenen Luft und der verschmutzten Luft außerhalb stattfinden muss.

Hierfür weist beispielsweise die aus der DE 10 2009 003 829 A1 bekannte Luftfedereinrichtung eine Belüftung in Form von Lüftungsbohrungen in einem Kragen der Außenführung auf, wobei der Kragen der Außenführung bei der beschriebenen Über-KopfLage der Luftfedereinrichtung dem Fahrwerk zugewandt ist. Die Belüftung des Faltenbalges findet also am Fußpunkt des Faltenbalges statt.

Bei einem Luftfederbein erfolgt die Anbindung des Faltenbalges auf der der Fahrbahn abgewandten Seite üblicherweise möglichst fest und dicht, so dass hier kein oder nur ein geringer Gasaustausch stattfindet.

Damit soll sichergestellt werden, dass kein Schmutz von oben in das Faltenbalginnere eintreten kann und der durch Einsaugen eingetretene Schmutz in Richtung Fahrwerk wieder nach außen gelangen kann.

Die Anordnung der Faltenbalgbelüftung an dem dem Fahrwerk zugewandten Fußpunkt des Faltenbalges führt zu der Sachlage, dass bei Einfederbewegungen der Luftfeder wegen der einhergehenden Volumenverringerung im Faltenbalginnern die Luft nach unten in Richtung Fahrwerk ausgestoßen wird, gleichzeitig gibt der Luftfederbalg an der Außenführung einen zunehmenden Bereich der Anlagefläche frei und deckt am Luftfederabrollkolben einen potentiell verschmutzten Bereich ab.

Bei Ausfederbewegungen der Luftfeder wird wegen der Volumenzunahme im Faltenbalginnern potentiell verschmutzte Luft von unten eingesaugt, gleichzeitig deckt der Luftfederbalg an der Außenführung einen zunehmenden und potentiell verschmutzten Bereich der Anlagefläche ab und legt am Kolben Anlagefläche frei.

Nachteilig ist damit, dass bei Federbewegungen Staub und/oder Fremdkörper ins Faltenbalginnere gesaugt werden. Problematisch wird das, wenn dieses Material nicht wieder nach außen gelangt, sondern in den Abrollbereich des Luftfederbalges gerät, wodurch der Faltenbalg seine erforderliche Schutzfunktion verloren hat und eine Beschädigung des Luftfederbalges nicht ausgeschlossen ist.

Der Erfindung liegt daher die Aufgabe zugrunde, ein dahingehend verbessertes Luftfederbein bereitzustellen, bei welchem die genannten Nachteile vermieden werden können.

Die Aufgabe wird erfindungsgemäß durch ein Luftfederbein gemäß dem Patentanspruch 1 gelöst. Das erfindungsgemäße Luftfederbein besteht aus einer Luftfeder und einem Dämpfer zu Federung und Dämpfung von Schwingungen eines Kraftfahrzeugfahrwerkes, welches zwischen Karosserie und Fahrwerk des Kraftfahrzeuges eingespannt ist, und weist einen zwischen einem Luftfederdeckel und einem Luftfederabrollkolben luftdicht eingespannten Luftfederbalg aus elastomerem Material, welcher unter Ausbildung einer Rollfalte am Luftfederkolben abrollt, und eine den Luftfederbalg hülsenförmig umfassende Außenführung und einem Faltenbalg, welcher die Rollfalte vor Verschmutzungen schützt und der an einem dem Luftfederdeckel abgewandten Ende der Außenführung befestigt ist, und Belüftungsmittel zur Belüftung eines von dem Faltenbalg umgebenen Raumes auf, wobei die Belüftungsmittel Belüftungsöffnungen an einem dem Fahrwerk zugewandten Ende des Faltenbalges umfassen und weitere zusätzliche Belüftungsöffnungen im Faltenbalg vorgesehen sind, welche eine Luftströmung innerhalb des Faltenbalges in Richtung Fahrwerk unterstützen.

Durch die weiteren Belüftungsöffnungen ändern sich die Strömungsverhältnisse insbesondere bei Ausfederbewegungen grundlegend, so dass ein Ansaugen der Luft ins Faltenbalginnere wesentlich reduziert werden kann.

Vorteilhafterweise weisen die zusätzlichen Belüftungsöffnungen gemäß einer Weiterbildung der Erfindung einen Strömungswiderstand auf, der kleiner als ein Strömungswiderstand der Belüftungsöffnungen ist. Durch die zusätzlichen Belüftungsöffnungen kann somit eine größere Menge Luft angesaugt werden, welche die Luftströmung durch die Belüftungsöffnungen am Fußende des Faltenbalges überlagert.

Gemäß einer vorteilhaften Ausführungsform der Erfindung sind die zusätzlichen Belüftungsöffnungen im Anschluss an einen Befestigungsbereich des Faltenbalges an der Außenführung angeordnet. Der Bereich ist in der Regel zylindrisch ausgestaltet, so dass die zusätzlichen Belüftungsöffnungen darin in einfacher Weise vorgesehen werden können.

Bei länglich ausgeführten Faltenbälgen ist es jedoch gemäß einer alternativen Ausführungsform der Erfindung auch möglich, die zusätzlichen Belüftungsöffnungen in einem mittleren Bereich des Faltenbalges anzuordnen.

Vorzugsweise sind Rückschlagmittel im Bereich der zusätzlichen Belüftungsöffnungen vorgesehen, welche einen Luftaustritt aus dem Faltenbalg wenigstens erschweren. Bei Einfederbewegungen kann hierdurch eine unerwünschte Luftströmung in Richtung Luftfederbalg verhindert werden.

Im Bereich der zusätzlichen Belüftungsöffnungen sind erfindungsgemäß Mittel zur Steuerung der Luftströmung innerhalb des Faltenbalges vorgesehen, so dass sichergestellt werden kann, dass die durch die zusätzlichen Belüftungsöffnungen einströmende Luft von der Rollfalte weggelenkt wird.

Vorzugsweise sind die Rückschlagmittel gleichzeitig zur Steuerung der Luftströmung innerhalb des Faltenbalges vorgesehen. Diese einteilige Ausführung der beiden Funktionen erleichtert insbesondere die Montage der Luftfeder.

Als Rückschlagmittel, welches gleichzeitig der Luftströmungssteuerung dient, kann gemäß einer einfachen und kostengünstigen Ausführungsform ein ringförmiges Gummielement vorgesehen sein, welches die zusätzlichen Belüftungsöffnungen auf einer Innenseite des Faltenbalges überdeckt.

Um die Befestigung des ringförmigen Gummielementes zu vereinfachen, kann es gemäß einer vorteilhaften Ausführungsform zwischen der Außenführung und einem Befestigungselement des Faltenbalges befestigt vorgesehen sein.

Eine weitere vorteilhafte Ausführungsform der Erfindung sieht vor, dass im Bereich der zusätzlichen Belüftungsöffnungen ein oder mehrere Filterelemente angeordnet sind. Ein Einsaugen von verschmutzter Luft durch die zusätzlichen Belüftungsöffnungen kann damit verhindert werden.

Weitere Merkmale, Vorteile und Anwendungsmöglichkeiten der Erfindung gehen aus den Unteransprüchen und der nachfolgenden Beschreibung von Ausführungsbeispielen sowie anhand der Zeichnung hervor. Es zeigt jeweils stark schematisiert sowie im Schnitt:
- Figur 1: einen Ausschnitt eines ersten erfindungsgemäßen Ausführungsbeispiels eines Luftfederbeins während einer Einfederbewegung;
- Figur 2: das Luftfederbein gemäß Fig. 1 während einer Ausfederbewegung;
- Figur 3: einen Ausschnitt eines zweiten erfindungsgemäßen Ausführungsbeispiels eines Luftfederbeins und
- Figur 4: einen Ausschnitt eines dritten erfindungsgemäßen Ausführungsbeispiels eines Luftfederbeins.

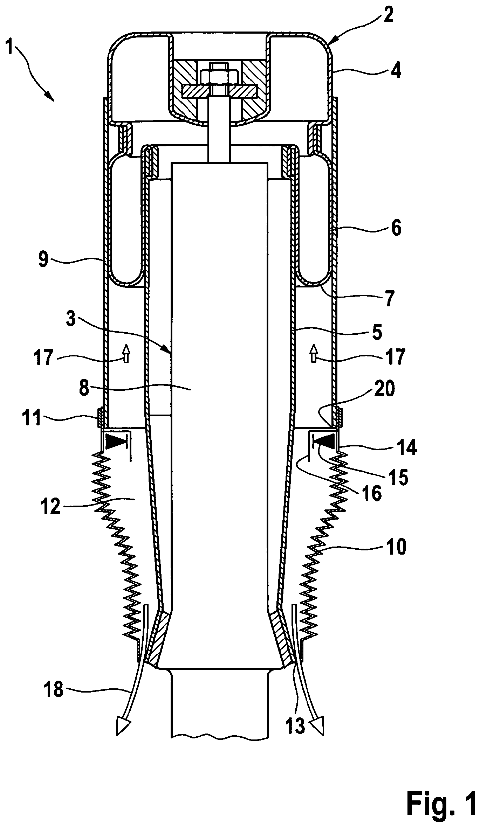

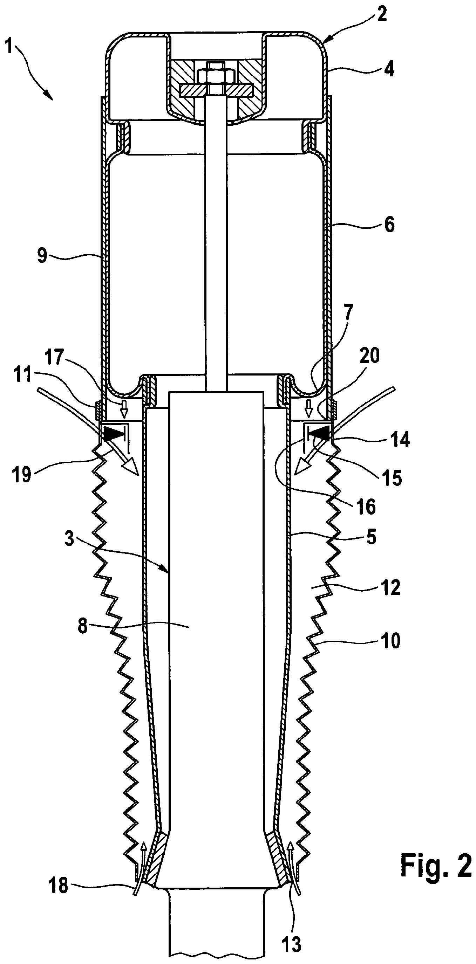

Die Fig. 1 und 2 zeigen in stark schematischer, geschnittener Darstellung einen Ausschnitt eines ersten Ausführungsbeispiels eines erfindungsgemäßen Luftfederbeins 1, welches zu Federung und Dämpfung von Schwingungen eines Kraftfahrzeugfahrwerkes zwischen Karosserie und Fahrwerk des Kraftfahrzeuges eingespannt ist und das aus einer Luftfeder 2 und einem konzentrisch angeordneten Dämpfer 3 besteht.

Die Luftfeder 2 weist einen zwischen einem Luftfederdeckel 4 und einem Luftfederabrollkolben 5 luftdicht eingespannten Luftfederbalg 6 aus elastomerem Material auf. Der Luftfederbalg 6 rollt unter Last und bei Federbewegungen unter Ausbildung einer Rollfalte 7 auf einer Außenkontur des konzentrischen Luftfederabrollkolbens 5 ab, welcher an einem Zylinderrohr 8 des Dämpfers 3 befestigt ist.

Weiter weist die Luftfeder 2 eine den Luftfederbalg 6 hülsenförmig umfassende Außenführung 9 auf, die an dem Luftfederdeckel 4 befestigt und so ausgebildet ist, dass der Luftfederbalg 6 einerseits an einer Außenseite des Luftfederabrollkolbens 5 und andererseits an der Innenoberfläche der Außenführung 9 abrollen kann.

Ein Faltenbalg 10 ist an einem dem Luftfederdeckel 4 abgewandten Ende der Außenführung 9 mittels eines Befestigungselementes 11 befestigt und schützt die Rollfalte 7 vor Verschmutzungen. Durch die Verwendung des Faltenbalges 10 verändert sich bei Federbewegungen der Luftfeder 2 gleichzeitig das Luftvolumen des von dem Faltenbalg 10 umgebenden Raumes 12. Damit ein Gasaustausch zwischen der vom Faltenbalg 10 eingeschlossenen Luft und Atmosphäre stattfindet, sind als Belüftungsmittel Belüftungsöffnungen 13 an einem dem Fahrwerk zugewandten Ende des Faltenbalges 10, d.h. am Fußpunkt des Faltenbalges 10 vorgesehen. Diese Belüftungsöffnungen 13 können mehr oder weniger speziell geformt sein, beispielsweise als gerade Durchlässe, Labyrinthe usw..

Bekannte Belüftungsmittel am Fußpunkt des Faltenbalges 11 haben den Nachteil, dass insbesondere bei Ausfederbewegungen Staub und/oder Fremdkörper ins Faltenbalginnere gesaugt werden können. Gelangen diese Partikel nicht wieder nach außen, sondern geraten in den Abrollbereich des Luftfederbalges 6, hat der Faltenbalg 10 seine erforderliche Schutzfunktion verloren und eine Beschädigung des Luftfederbalges ist nicht ausgeschlossen.

Daher weisen die nachfolgend näher beschriebenen erfindungsgemäßen Luftfederbeine 1 weitere zusätzliche Belüftungsöffnungen 14 im Faltenbalg 10 auf, welche eine Luftströmung innerhalb des Faltenbalges 10 in Richtung Fahrwerk unterstützen. Wie nachfolgend ausgeführt wird, ändern sich durch die zusätzlichen Belüftungsöffnungen 14 die Strömungsverhältnisse insbesondere bei Ausfederbewegungen grundlegend, so dass ein Ansaugen der Luft ins Faltenbalginnere wesentlich reduziert werden kann.

Die zusätzlichen Belüftungsöffnungen 14 sind im Anschluss an einen Befestigungsbereich des Faltenbalges 10 an der Außenführung 9 angeordnet und weisen einen kleineren Strömungswiderstand als die Belüftungsöffnungen 13 auf, so dass durch die zusätzlichen Belüftungsöffnungen 14 eine größere Menge Luft angesaugt werden kann, welche die Luftströmung durch die Belüftungsöffnungen 13 am Fußende des Faltenbalges 10 überlagert.

Durch einen Pfeil angedeutete Rückschlagmittel 15 im Bereich der zusätzlichen Belüftungsöffnungen 14 erschweren bzw. verhindern einen Luftaustritt aus dem Faltenbalg 10 durch die zusätzlichen Belüftungsöffnungen 14, was insbesondere bei Einfederbewegungen relevant ist.

Ferner können im Bereich der zusätzlichen Belüftungsöffnungen 14 Mittel zur Steuerung der Luftströmung 16 innerhalb des Faltenbalges 10 vorgesehen, so dass sichergestellt werden kann, dass die durch die zusätzlichen Belüftungsöffnungen 14 einströmende Luft von der Rollfalte 7 weggelenkt wird.

Fig. 1 zeigt das erste Ausführungsbeispiel in einer Einfederbewegung (dargestellt durch einen Pfeil 17), bei welcher sich der Raum 12 im Faltenbalginnern verringert und die Luft (dargestellt durch einen Pfeil 18) durch die Belüftungsöffnungen 13 am Fußende des Faltenbalges 10 nach unten in Richtung Fahrwerk ausgestoßen wird. Gleichzeitig gibt der Luftfederbalg 6 an der Außenführung 9 einen zunehmenden Bereich der Anlagefläche frei und deckt am Luftfederabrollkolben 5 einen potentiell verschmutzten Bereich ab. Durch die Rückschlagmittel 15 bleiben die Strömungsverhältnisse bei einer Einfederbewegung im Vergleich zu bekannten Belüftungsmitteln gleich.

Bei einer Ausfederbewegung der Luftfeder 2 (angedeutet durch Pfeil 17), welche in Fig. 2 dargestellt wird, wird wegen der Volumenzunahme im Faltenbalginnern potentiell verschmutzte Luft 18 von unten eingesaugt. Gleichzeitig deckt der Luftfederbalg 6 an der Außenführung 9 einen zunehmenden und potentiell verschmutzten Bereich der Anlagefläche ab und legt am Luftfederabrollkolben 5 Anlagefläche frei.

Im Vergleich zu bekannten Belüftungsmitteln ändern sich durch die zusätzlichen Belüftungsöffnungen 14 die Strömungsverhältnisse bei Ausfederbewegungen grundlegend. Es wird nun verschmutzte Luft 18 sowohl durch die unteren Belüftungsöffnungen 13 eingesogen als auch durch die zusätzlichen oberen Belüftungsöffnungen 14 eingesogen (dargestellt durch einen Pfeil 19). Wegen des geringeren Strömungswiderstandes der zusätzlichen Belüftungsöffnungen 14 wird an der unteren Belüftung weniger Luft 18 angesogen. Die größere Menge der oben angesaugten Luft 19 wird in das Faltenbalgvolumen unterhalb einer Unterkante 20 der Außenführung 9 strömen, da das Volumen zwischen Außenführung 9 und Luftfederabrollkolben 5 oberhalb der Unterkante 20 der Außenführung 9 abnimmt und dadurch Luft aus diesem Bereich hinausgedrückt wird. Die Strömungsrichtung der eingesogenen Luft 19 in Richtung Belüftungsöffnungen 13 wird durch die Mittel zur Steuerung der Luftströmung 16 unterstützt.

Bei aufeinanderfolgenden Ein- und Ausfederbewegungen der Luftfeder 2 tritt ein Selbstreinigungseffekt der Luft im Faltenbalginnern ein:
Die Luftströmungen im Innern des Faltenbalges 10 sind vorwiegend von den zusätzlichen Belüftungsöffnungen 14 hin zu den Belüftungsöffnungen 13 am Fußende des Faltenbalges 10 mit einer leichten oszillierenden Überlagerung bei den Ein- und Ausfederbewegungen der Luftfeder gerichtet. Im Mittel ist am Fußpunkt des Faltenbalges 10 die ausstoßende Strömungsrichtung bevorzugt.

Schmutzablagerungen, die durch die verunreinigte Luft entstehen, werden zu Zeiten weniger verunreinigter Luft in Richtung Fahrwerk ausgeschwemmt.

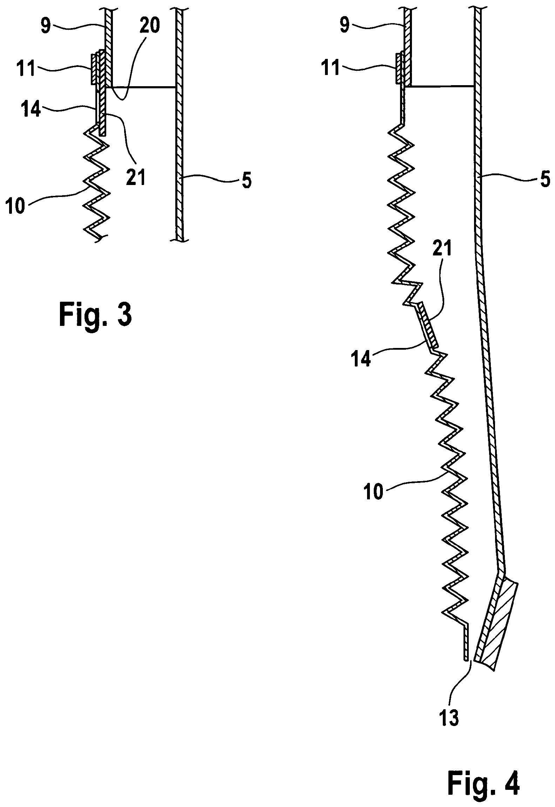

Fig. 3 zeigt einen Ausschnitt eines zweiten Ausführungsbeispiels. Als Rückschlagmittel 15 ist hierbei in einfacher und kostengünstiger Weise ein ringförmiges Gummielement 21 vorgesehen, welches die zusätzlichen Belüftungsöffnungen 14 auf einer Innenseite des Faltenbalges 10 überdeckt und in einfacher Weise zwischen der Außenführung 9 und einem Befestigungselement 11 des Faltenbalges 10 befestigt ist. Dieses Gummielement 21 dient vorteilhafterweise gleichzeitig zur Steuerung der Luftströmung innerhalb des Faltenbalges 10, da es beim Umklappen die Luft in Richtung Belüftungsöffnungen 13 am Fußende des Faltenbalges 10 lenkt.

Bei länglich ausgeführten Faltenbälgen 10 ist es jedoch gemäß eines in Fig. 4 dargestellten Ausführungsbeispiels auch möglich, die zusätzlichen Belüftungsöffnungen 14 in einem mittleren Bereich des Faltenbalges 10 anzuordnen und beispielsweise das ringförmige Gummielement 21 auf einer Innenseite des Faltenbalges 10 zu befestigen. Alternativ könnte bei Belüftungsöffnungen 14 in einem mittleren Bereich des Faltenbalges 10 auch ein längeres Gummielement vorgesehen werden, welches, wie zu Fig. 3 beschrieben, mittels des Befestigungselementes 11 befestigt ist.

Eine andere Ausführungsmöglichkeit (ohne Darstellung) ist die Verwendung handelsüblicher Rückschlagventile und anderer Luftleitelemente (Bleche o.ä.).

Des Weiteren können bei allen beschriebenen Ausführungsbeispielen im Bereich der zusätzlichen Belüftungsöffnungen 14 ein oder mehrere Filterelemente angeordnet sein. Ein Einsaugen von verschmutzter Luft durch die zusätzlichen Belüftungsöffnungen kann damit verhindert werden. Vorgesehen werden könnten beispielsweise Filterelemente basierend auf Porenmaß und/oder auf Verwirbelung-Zykloneffekt.

### Bezugszeichenliste

- 1: Luftfederbein
- 2: Luftfeder
- 3: Dämpfer
- 4: Luftfederdeckel
- 5: Luftfederabrollkolben
- 6: Luftfederbalg
- 7: Rollfalte
- 8: Zylinderrohr
- 9: Außenführung
- 10: Faltenbalg
- 11: Befestigungselement
- 12: Raum
- 13: Belüftungsöffnung
- 14: Belüftungsöffnung
- 15: Rückschlagmittel
- 16: Mittel zur Steuerung der Luftströmung
- 17: Einfederbewegung/Ausfederbewegung
- 18: Luft
- 19: Luft
- 20: Unterkante
- 21: Gummielement

## Patentansprüche

1. Luftfederbein (1) bestehend aus einer Luftfeder (2) und einem Dämpfer (3) zu Federung und Dämpfung von Schwingungen eines Kraftfahrzeugfahrwerkes, welches zwischen Karosserie und Fahrwerk des Kraftfahrzeuges eingespannt ist,mit einem zwischen einem Luftfederdeckel (4) und einem Luftfederabrollkolben (5) luftdicht eingespannten Luftfederbalg (6) aus elastomerem Material, welcher unter Ausbildung einer Rollfalte (7) am Luftfederabrollkolben (5) abrollt, mit einer den Luftfederbalg (6) hülsenförmig umfassenden Außenführung (9) und einem Faltenbalg (10), welcher die Rollfalte (7) vor Verschmutzungen schützt und der an einem dem Luftfederdeckel (4) abgewandten Ende der Außenführung (9) befestigt ist, **dadurch gekennzeichnet, dass** Belüftungsmittel zur Belüftung eines von dem Faltenbalg (10) umgebenen Raumes (12) vorgesehen sind, wobei die Belüftungsmittel Belüftungsöffnungen (13) an einem dem Fahrwerk zugewandten Ende des Faltenbalges (10) umfassen und weitere zusätzliche Belüftungsöffnungen (14) im Faltenbalg (10) vorgesehen sind, welche eine Luftströmung innerhalb des Faltenbalges (10) in Richtung Fahrwerk unterstützen, wobei im Bereich der zusätzlichen Belüftungsöffnungen (14) Mittel zur Steuerung der Luftströmung (16) innerhalb des Faltenbalges (10) vorgesehen sind.

2. Luftfederbein (1) nach Anspruch 1, **dadurch gekennzeichnet dass**, die zusätzliche Belüftungsöffnungen (14) einen Strömungswiderstand aufweisen, der kleiner als ein Strömungswiderstand der Belüftungsöffnungen (13) ist.

3. Luftfederbein (1) nach Anspruch 1 oder 2, **dadurch gekennzeichnet dass**, die zusätzlichen Belüftungsöffnungen (14) im Anschluss an einen Befestigungsbereich des Faltenbalges (10) an der Außenführung (9) angeordnet sind.

4. Luftfederbein (1) nach Anspruch 3, **dadurch gekennzeichnet, dass** die zusätzlichen Belüftungsöffnungen (14) in einem mittleren Bereich des Faltenbalges (10) angeordnet sind.

5. Luftfederbein (1) nach einem der vorangegangenen Ansprüche 1 bis 4, **dadurch gekennzeichnet, dass** Rückschlagmittel (15) im Bereich der zusätzlichen Belüftungsöffnungen (14) vorgesehen sind, welche einen Luftaustritt aus dem Faltenbalg (10) wenigstens erschweren.

6. Luftfederbein (1) nach Anspruch 5, **dadurch gekennzeichnet, dass** die Rückschlagmittel (15) gleichzeitig zur Steuerung der Luftströmung innerhalb des Faltenbalges (10) vorgesehen sind.

7. Luftfederbein (1) nach Anspruch 6, **dadurch gekennzeichnet, dass** ein ringförmiges Gummielement (21) vorgesehen ist, welches die zusätzlichen Belüftungsöffnungen (14) auf einer Innenseite des Faltenbalges (10) überdeckt.

8. Luftfederbein (1) nach Anspruch 7, **dadurch gekennzeichnet, dass** das ringförmige Gummielement (21) zwischen der Außenführung (9) und einem Befestigungselement des Faltenbalges (10) befestigt vorgesehen ist.

9. Luftfederbein (1) nach einem der vorhergehenden Ansprüche 1 bis 8, **dadurch gekennzeichnet dass**, im Bereich der zusätzlichen Belüftungsöffnungen (14) ein oder mehrere Filterelemente angeordnet sind.

## Claims

1. Air spring strut (1) consisting of an air spring (2) and a damper (3) for spring suspension and damping of vibrations of a motor vehicle chassis, which air spring strut is clamped between the body and the chassis of the motor vehicle, with an air spring bellows (6) which is composed of elastomeric material, is clamped in an airtight manner between an air spring cover (4) and an air spring rolling piston (5) and rolls on the air spring rolling piston (5) with the formation of a rolling fold (7), with an outer guide (9) enclosing the air spring bellows (6) in a sleeve-shaped manner, and an expansion bellows (10) which protects the rolling fold (7) from dirt accumulations and which is fastened to an end of the outer guide (9) that faces away from the air spring cover (4), **characterized in that** ventilation means for ventilating a space (12) surrounded by the expansion bellows (10) are provided, wherein the ventilation means comprise ventilation openings (13) at an end of the expansion bellows (10) that faces the chassis, and further additional ventilation openings (14) are provided in the expansion bellows (10), said additional ventilation openings assisting an airflow within the expansion bellows (10) in the direction of the chassis, wherein means for controlling the airflow (16) within the expansion bellows (10) are provided in the region of the additional ventilation openings (14).

2. Air spring strut (1) according to Claim 1, **characterized in that** the additional ventilation openings (14) have a flow resistance which is smaller than a flow resistance of the ventilation openings (13).

3. Air spring strut (1) according to Claim 1 or 2, **characterized in that** the additional ventilation openings (14) are arranged following a fastening region of the expansion bellows (10) to the outer guide (9).

4. Air spring strut (1) according to Claim 3, **characterized in that** the additional ventilation openings (14) are arranged in a central region of the expansion bellows (10).

5. Air spring strut (1) according to one of the preceding Claims 1 to 4, **characterized in that** nonreturn means (15) are provided in the region of the additional ventilation openings (14) and at least make an outlet of air from the expansion bellows (10) difficult.

6. Air spring strut (1) according to Claim 5, **characterized in that** the nonreturn means (15) are provided at the same time for controlling the airflow within the expansion bellows (10).

7. Air spring strut (1) according to Claim 6, **characterized in that** an annular rubber element (21) is provided which covers the additional ventilation openings (14) on an inner side of the expansion bellows (10).

8. Air spring strut (1) according to Claim 7, **characterized in that** the annular rubber element (21) is provided fastened between the outer guide (9) and a fastening element of the expansion bellows (10).

9. Air spring strut (1) according to one of the preceding Claims 1 to 8, **characterized in that** one or more filter elements are arranged in the region of the additional ventilation openings (14).

## Revendications

1. Jambe de suspension pneumatique (1), composée d'une suspension pneumatique (2) et d'un amortisseur (3) servant à suspendre et amortir des vibrations d'un châssis de véhicule automobile qui est comprimée entre la carrosserie et le châssis du véhicule automobile,
comprenant un soufflet de suspension pneumatique (6) en matériau élastomère, comprimé hermétiquement entre un chapeau de suspension pneumatique (4) et un piston de déroulement de suspension pneumatique (5), qui se déroule en réalisant un pli de déroulement (7) sur le piston de déroulement de suspension pneumatique (5), comprenant un guide extérieur (9) saisissant en forme de douille le soufflet de suspension pneumatique (6), et un soufflet (10) qui protège le pli de déroulement (7) des salissures et qui est fixé à une extrémité du guide extérieur (9), détournée du chapeau de suspension pneumatique (4),
**caractérisée en ce que** des moyens de ventilation servant à ventiler l'espace (12) entourant le soufflet (10) sont prévus, les moyens de ventilation comprenant des orifices de ventilation (13) à une extrémité du soufflet (10), tournée vers le châssis, et d'autres orifices de ventilation supplémentaires (14) étant prévus dans le soufflet (10) qui assistent un écoulement d'air à l'intérieur du soufflet (10) en direction du châssis, dans laquelle, dans la zone des orifices de ventilation supplémentaires (14), des moyens de commande de l'écoulement d'air (16) sont prévus à l'intérieur du soufflet (10).

2. Jambe de suspension pneumatique (1) selon la revendication 1, **caractérisée en ce que** les orifices de ventilation supplémentaires (14) présentent une résistance à l'écoulement qui est inférieure à une résistance à l'écoulement des orifices de ventilation (13).

3. Jambe de suspension pneumatique (1) selon la revendication 1 ou 2, **caractérisée en ce que** les orifices de ventilation supplémentaires (14) sont disposés à la suite d'une zone de fixation du soufflet (10) sur le guide extérieur (9).

4. Jambe de suspension pneumatique (1) selon la revendication 3, **caractérisée en ce que** les orifices de ventilation supplémentaires (14) sont disposés dans une zone centrale du soufflet (10).

5. Jambe de suspension pneumatique (1) selon l'une quelconque des revendications précédentes 1 à 4, **caractérisée en ce que** dans la zone des orifices de ventilation supplémentaires (14) des moyens antiretour (15) sont prévus qui gênent au moins une sortie d'air du soufflet (10).

6. Jambe de suspension pneumatique (1) selon la revendication 5, **caractérisée en ce que** les moyens antiretour (15) sont prévus en même temps pour commander l'écoulement d'air à l'intérieur du soufflet (10).

7. Jambe de suspension pneumatique (1) selon la revendication 6, **caractérisée en ce qu'**un élément en caoutchouc annulaire (21) est prévu qui recouvre les orifices de ventilation supplémentaires (14) sur une face intérieure du soufflet (10).

8. Jambe de suspension pneumatique (1) selon la revendication 7, **caractérisée en ce que** l'élément en caoutchouc annulaire (21) est prévu entre le guide extérieur (9) et un élément de fixation du soufflet (10).

9. Jambe de suspension pneumatique (1) selon l'une quelconque des revendications précédentes 1 à 8, **caractérisée en ce qu'**un ou plusieurs éléments filtrants sont disposés dans la zone des orifices de ventilation supplémentaires (14).
